# EUROPEAN PATENT APPLICATION

(11) **EP 2 839 989 A1**
(43) Date of publication of application: **25.02.2015**
(21) Application number: 14000210.6
(22) Date of filing: 21.01.2014
(51) Int. Cl.: B60Q 1/00, F21S 8/10

(54) **Vehicle light apparatus**

(30) Priority: 19.08.2013 TW 102129650
(71) Applicant: T.Y.C. Brother Industrial Co., Ltd., 70248 Tainan City (TW)
(72) Inventor: Tsai, Ming-Hsien, 70248 Tainan City (TW); Hwang, Ching-Hsien, 70848 Tainan City (TW); Lin, Min-Feng, 70248 Tainan City (TW)
(74) Representative: Zeitler - Volpert - Kandlbinder

(57) **Abstract**

A vehicle light apparatus includes a diffuser (3), a light-emitting unit (4), a light guide member (5), and a light control unit (6) to switch the light-emitting unit (4) between driving light and decorative light modes. The light-emitting unit (4) provides an illuminating effect or a warning effect when operating in the driving light mode. The light-emitting unit (4) in the decorative light mode emits a light color different from that emitted in the driving light mode. The light guide member (5) guides light rays from the light-emitting unit (4) to exit from the diffuser (3).

## Description

The invention relates to a light apparatus, more particularly to a vehicle light apparatus suitable for use as a headlight or a taillight.

Currently, the design of a conventional vehicle light apparatus is focused on the illumination effect. For example, the conventional vehicle light apparatus that serves as a headlight generally is switchable between high-beam and low-beam headlights and light patterns and brightness thereof have to meet relevant regulations. However, the conventional vehicle light apparatus only provides the headlight, the taillight, the brake light or the turn signal light in a monochromatic manner so as to perform the warning function.

Therefore, an object of the present invention is to provide a vehicle light apparatus that has a decorating function in addition to a warning function.

According to the present invention, a vehicle light apparatus includes a housing, a diffuser mounted to a front side of the housing, a light-emitting unit mounted to the housing, a light guide member disposed in the housing, and a light control unit electrically coupled to the light-emitting unit.

The light-emitting unit includes a circuit board and a plurality of light-emitting elements that are connected electrically to the circuit board. The light-emitting unit is switchable between driving light and decorative light modes. The light-emitting unit provides an illuminating effect or a warning effect when operating in the driving light mode. The light-emitting unit in the decorative light mode emits a light color different from that emitted in the driving light mode. The light-emitting elements cooperate to produce the light color in each of the driving light and decorative light modes.

The light guide member guides light rays from the light-emitting elements, such that the light rays exit from the diffuser.

The light control unit includes a control module that generates first and second signals. The control module generates the first signal to switch the light-emitting unit to the driving light mode. The control module generates the second signal to switch the light-emitting unit to the decorative light mode.

Other features and advantages of the present invention will become apparent in the following detailed description of the preferred embodiment with reference to the accompanying drawings, of which:
Figure 1 is a front view illustrating the preferred embodiment of a vehicle light apparatus according to the present invention;
Figure 2 is a left side view of the preferred embodiment;
Figure 3 is a fragmentary exploded perspective view of the preferred embodiment; and
Figure 4 is a block diagram of the preferred embodiment.

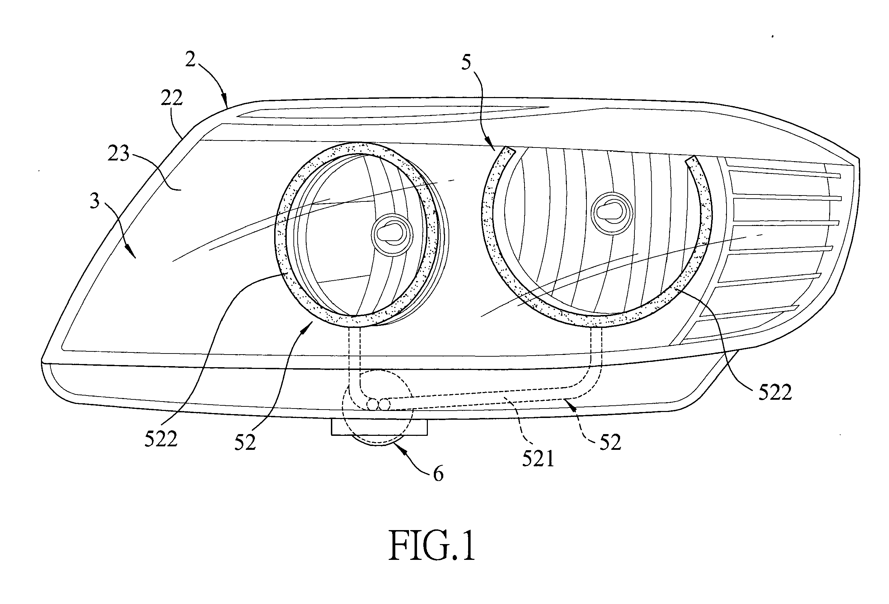

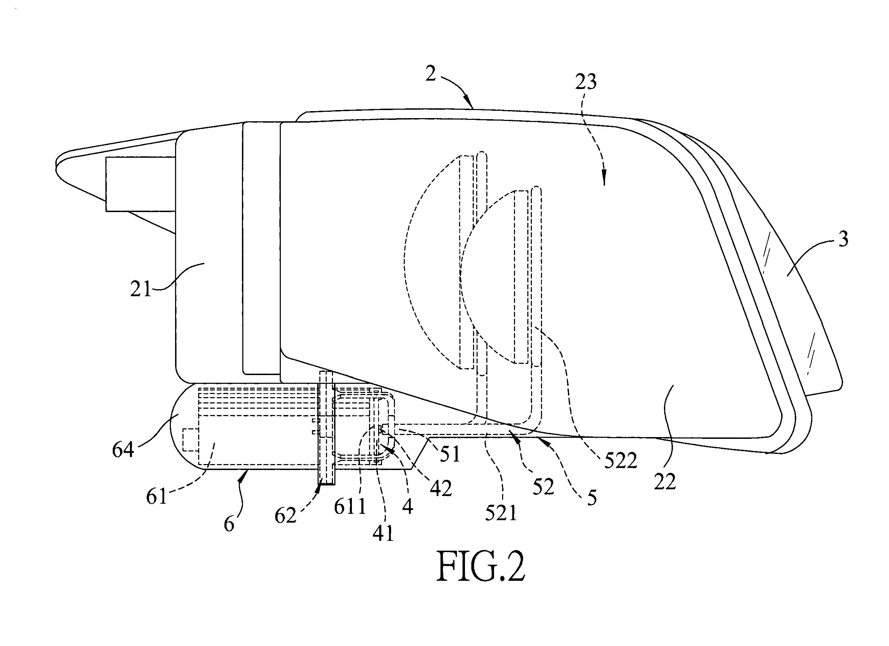

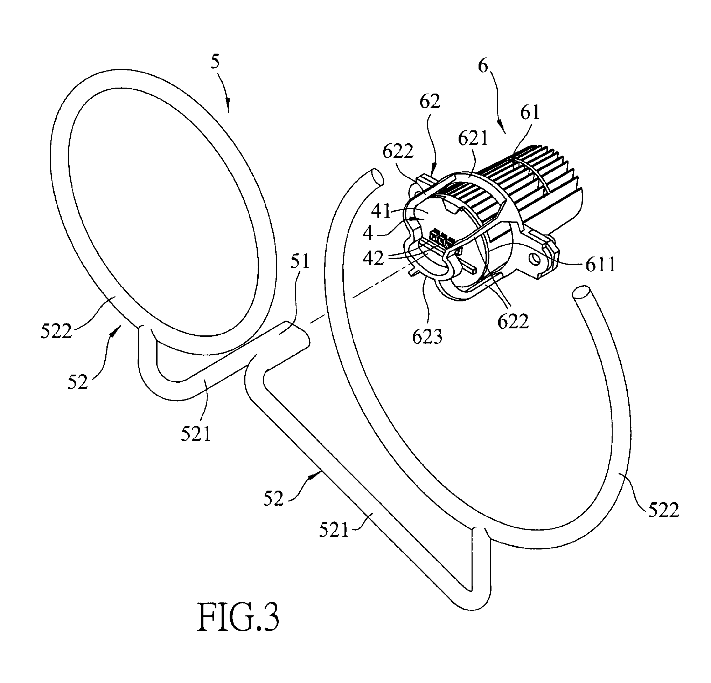

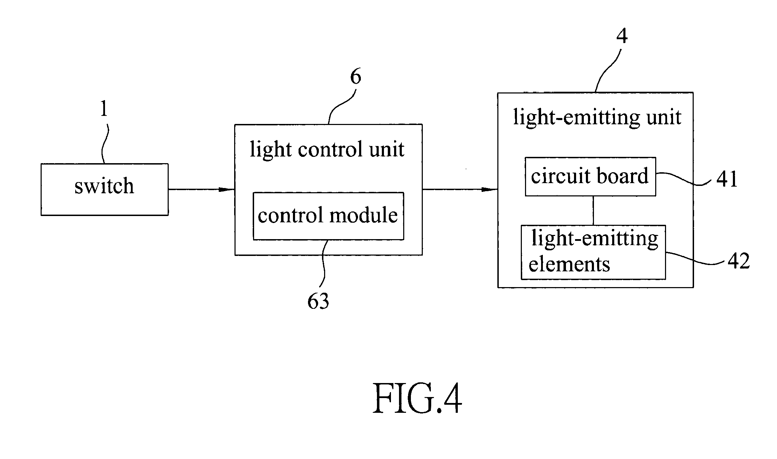

Referring to Figures 1 to 4, the preferred embodiment of a vehicle light apparatus according to the present invention is shown to be suitable for use as a headlight or a taillight for a vehicle. The vehicle light apparatus is coupled electrically to a switch 1 of the vehicle. In this preferred embodiment, the vehicle light apparatus includes a housing 2, a diffuser 3 mounted to a front side of the housing 2, a light-emitting unit 4 mounted to the housing 2, a light guide member 5 disposed in the housing 2, and a light control unit 6 mounted to the housing 2.

The housing 2 includes a mounting part 21 and a surrounding part 22 that extends peripherally from the mounting part 21 in a manner that the surrounding part 22 and the mounting part 21 cooperatively define a receiving space 23. The diffuser 3 covers the receiving space 23. Since the feature of this invention does not reside in the specific configuration of the housing 2, which may be readily appreciated by those skilled in the art, details of the same are omitted herein for the sake of brevity.

In this preferred embodiment, the light-emitting unit 4 is disposed rearward of the diffuser 3 and includes a circuit board 41 and a plurality of light-emitting elements 42 that are connected electrically to the circuit board 41. The light-emitting unit 4 is switchable between driving light and decorative light modes. The light-emitting unit 4 provides an illuminating effect or a warning effect when operating in the driving light mode. The light-emitting unit 4 in the decorative light mode emits a light color different from that emitted in the driving light mode. Preferably, the light-emitting elements 42 are light-emitting diodes (LEDs) that cooperate to produce the light color in each of the driving light and decorative light modes. More preferably, the light-emitting elements 42 can be arranged in different groups. In each group, the light-emitting elements 42 are attributed to the same light color. However, the light colors produced by the groups of the light-emitting elements 42 are different from one another. Alternatively, each of the light-emitting elements 42 may be composed of LEDs with different light colors, and thus may emit different light colors. By virtue of LEDs that may be attributed to different light colors, the light-emitting elements 42 can cooperate with each other to mix light in a white or desired color.

In the driving light mode, when the vehicle light apparatus is used as a headlight, the light-emitting unit 4 may produce a white or yellow light with relatively high brightness. On the other hand, when the vehicle light apparatus is used as a taillight, the light-emitting unit 4 is operable to provide a brake light to warn people about a driving status of the vehicle. In the decorative light mode, the light-emitting unit 4 is operable to emit red, blue or green light so as to provide continuous or intermittent light. Alternatively, the light-emitting unit 4 in the decorative light mode may produce time-varying brightness. For example, the light-emitting unit 4 may provide a gradually brightening or dimming effect in a diverse light color range. In either the driving light or decorative light modes, the light-emitting elements 42 cooperatively produce sufficient light without assistance from other light sources of the vehicle. In addition, the light-emitting elements 42 are independent from each other in terms of control of brightness, light color and lighting time, and thus the light-emitting unit 4 can provide mixed light by cooperation of the light-emitting elements 42 with each other.

The light guide member 5 is disposed in the receiving space 23 of the housing 2 and guides light rays from the light-emitting elements 42, such that the light rays exit from the diffuser 3. In addition, the light guide member 5, which is made of a plastic material, has a light-entry portion 51 that is registered with the light-emitting elements 42, and at least one light-exit portion 52 that is connected to the light-entry portion 51. The light-exit portion 52 has a rod-like light guiding section 521 and an arcuate light-exit section 522. The rod-like light guiding section 521 is connected to the light-entry portion 51 and extends forward and toward the diffuser 3. The arcuate light-exit section 522 is connected to a front end of the light guiding section 521. In this preferred embodiment, the light guide member 5 has a pair of light-exit portions 52 that are connected to the light-entry portion 51. The light-exit sections 522 of the light-exit portions 52 are disposed respectively at left and right parts of the housing 1. The light guiding sections 521 of the light-exit portions 52 are respectively connected to the light-exit sections 522 and extend rearward to merge with each other and to connect to the light-entry portion 51. Preferably, one of the light-exit sections 522 forms a closed ring, and the other one of the light-exit sections 522 forms a C-shape with an upward opening. However, the actual configuration of the light-exit portion 52 is not limited to this described embodiment.

The light control unit 6 is electrically coupled to the light-emitting unit 4. In this preferred embodiment, the light control unit 6 includes a control module 63 that generates first and second signals. The control module 63 is electrically coupled to the light-emitting unit 4 and the switch 1 of the vehicle, and is capable of generating the first signal to switch the light-emitting unit 4 to the driving light mode and the second signal to switch the light-emitting unit 4 to the decorative light mode. In this preferred embodiment, the light control unit 6 further includes a bridge rectifier (not shown) that is electrically coupled to the light-emitting elements 42. The bridge rectifier controls switching of positive and negative polarities of the light-emitting elements 42 so as to avoid damage of the light-emitting elements 42 when in use.

Preferably, the vehicle light apparatus further includes a heat dissipation member 61 that is mounted to the housing 2, and an installing member 62 that is coupled to the heat dissipation member 61. The installing member 62 and the control module 63 cooperatively form a modularized casing 64 that receives the heat dissipation member 61 therein. In this preferred embodiment, the heat dissipation member 61 is constituted by a pair of metal plates to form a heat dissipation outer surface, and has a mounting surface 611 that faces toward the light-emitting unit 4 and that is configured to hold the circuit board 41. The installing member 62 has an engagement portion 623 that is situated in front of the circuit board 41 and the light-emitting elements 42. The light-entry portion 51 of the light guide member 5 is coupled to the engagement portion 623, and is thus registered with the light-emitting elements 42. Preferably, the installing member 62 further has a ring portion 621 that surrounds the heat dissipation member 61, and a plurality of connection portions 622 that respectively and forwardly extend from the ring portion 621 and that respectively interconnect the ring portion 621 and the engagement portion 623. Since the feature of this invention does not reside in the specific configurations of the heat dissipation members 61 and the installation member 62, which may be readily appreciated by those skilled in the art, details of the same are omitted herein for the sake of brevity.

By operating the switch 1 of the vehicle, a driver may control the control module 63 to generate the first signal or the second signal, such that the light-emitting unit 4 is switched to the driving light mode or the decorative light mode. In this preferred embodiment, the switch 1 can be configured as a push button or any verity of user-activated switch mechanisms. The switch 1 is conveniently disposed for the driver. For example, the switch 1 may be disposed on a steering wheel or at an area inside the vehicle proximate to the driver. When the vehicle light apparatus is used as a headlight, a pair of the vehicle light apparatuses may be respectively mounted to the left and right front sides of the vehicle. When the driver switches the light-emitting units 4 of the vehicle light apparatuses to the driving light mode, the light-emitting units 4 of the vehicle light apparatuses can provide an illuminating effect of the driving light. Moreover, in the driving light mode, the light-emitting units 4 of the vehicle light apparatuses are operable to switch between the high-beam and low beam light distribution patterns and produce white/yellow light in compliance with relevant regulations. For each vehicle light apparatus, since the light rays are guided from the light guiding section 521 to the light-exit section 522 of the light guide member 5, the vehicle light apparatuses provide light distribution in the form of a pair of rings at left and front sides of the vehicle. When the driver switches the light-emitting units 4 of the vehicle light apparatuses to the decorative light mode, the light-emitting units 4 of the vehicle light apparatuses provide continuous or intermittent light color that is time-varying in terms of brightness.

In other embodiments, the vehicle light apparatus may be used as a taillight, such as a turn signal light or a brake light. When the driver switches the light-emitting unit 4 of the vehicle light apparatus to the driving light mode, the turn signal light or the brake light produced by the light-emitting unit 4 of the vehicle light apparatus warns people about a driving status of the vehicle. When the driver switches the light-emitting unit 4 of the vehicle light apparatus to the decorative light mode, the light-emitting unit 4 of the vehicle light apparatus provides colorful and fascinating light rearward of the vehicle.

It should be noted that the vehicle light apparatus of this invention may be modularized as one-piece so as to be mountable to or detachable from the vehicle. Furthermore, the light control unit 6 and the light-emitting unit 4 may be also designed in a modular manner so that a module of the light control unit 6 and the light-emitting unit 4 may not only be mounted to the housing 2 of the vehicle light apparatus of the present invention, but also be mounted to a housing of a conventional vehicle light apparatus.

## Claims

1. A vehicle light apparatus **characterized by**:
a housing (2);
a diffuser (3) mounted to a front side of said housing (2);
a light-emitting unit (4) mounted to said housing (2) and including a circuit board (41) and a plurality of light-emitting elements (42) that are connected electrically to said circuit board (41), said light-emitting unit (4) being switchable between driving light and decorative light modes, said light-emitting unit (4) providing an illuminating effect or a warning effct when operating in the driving light mode, said light-emitting unit (4) in the decorative light mode emitting a light color different from that emitted in the driving light mode, said light-emitting elements (42) cooperating to produce the light color in each of the driving light and decorative light modes;
a light guide member (5) disposed in said housing (2) to guide light rays from said light-emitting elements (42), such that the light rays exit from said diffuser (3); and
a light control unit (6) electrically coupled to said light-emitting unit (4), said light control unit (6) including a control module (63) that generates first and second signals, said control module (63) generating said first signal to switch said light-emitting unit (4) to the driving light mode, said control module (63) generating said second signal to switch said light-emitting unit (4) to the decorative light mode.

2. The vehicle light apparatus as claimed in 1, further **characterized by** a heat dissipation member (61) that is mounted to said housing (2), and an installing member (62) that is coupled to said heat dissipation member (61), said heat dissipation member (61) havingamounting surface (611) that faces toward said light-emitting unit (4) and that is configured to hold said circuit board (41), said installing member (62) having an engagement portion (623) that is situated in front of said circuit board (41) and said light-emitting elements (42), said light guide member (5) having a light-entry portion (51) that is coupled to said engagement portion (623) and that is registered with said light-emitting elements (42), and at least one light-exit portion (52) that is connected to said light-entry portion (51).

3. The vehicle light apparatus as claimed in Claim 2, **characterized in that** said light-exit portion (52) has a rod-like light guiding section (521) that is connected to said light-entry portion (51) and that extends forward and toward said diffuser (3), and an arcuate light-exit section (522) that is connected to a front end of said light guiding section (521).

4. The vehicle light apparatus as claimed in 3, **characterized in that** said light guide member (5) has a pair of said light-exit portions (52), said light-exit sections (522) of said light-exit portions (52) being disposed respectively at left and right parts of said housing (1), said light guiding sections (521) of said light-exit portions (52) being respectively connected to said light-exit sections (522) and extending rearward to merge with each other and to connect to said light-entry portion (51).

5. The vehicle light apparatus as claimed in 4, **characterized in that** one of said light-exit sections (522) forms a closed ring, and the other one of said light-exit sections (522) forms a C-shape.

6. The vehicle light apparatus claimed in Claim 1, **characterized in that** said light-emitting unit (4) produces white or yellow light in the driving light mode.

7. The vehicle light apparatus claimed in Claim 5, **characterized in that** said light-emitting unit (4) in the decorative light mode produces time-varying brightness.
